## Europäisches Patentamt

## European Patent Office

## Office européen des brevets

(19)

(11) Veröffentlichungsnummer: **0 039 797**
**B1**

(12)

# EUROPÄISCHE PATENTSCHRIFT

(45) Veröffentlichungstag der Patentschrift:
18.05.83

(51) Int. Cl.³: **C 09 J 3/16, C 08 G 18/62**

(21) Anmeldenummer: 81102896.8

(22) Anmeldetag: 15.04.81

(54) Polyisocyanate enthaltende Haftkleber.

(30) Priorität: 12.05.80 DE 3018131

(43) Veröffentlichungstag der Anmeldung:
18.11.81 Patentblatt 81/46

(45) Bekanntmachung des Hinweises auf die Patenterteilung:
18.05.83 Patentblatt 83/20

(84) Benannte Vertragsstaaten:
AT BE CH DE FR GB IT LI NL SE

(56) Entgegenhaltungen:
CH-A-426 252
FR-A-1 533 520

CHEMICAL ABSTRACTS, Band 77, Nr. 2, 10. Juli 1972,
Seite 132, Nr. 7455a
Columbus, Ohio, U.S.A.

(73) Patentinhaber: BASF Aktiengesellschaft,
Carl-Bosch-Strasse 38, D-6700 Ludwigshafen (DE)

(72) Erfinder: Hoene, Richard, Dr., Goerresstrasse 27,
D-6900 Heidelberg (DE)
Erfinder: Druschke, Wolfgang, Dr., Berliner Strasse 28,
D-6711 Dirmstein (DE)

ACTORUM AG

## Polyisocyanate enthaltende Haftkleber

Synthetisch hergestellte Rohstoffe für Haftkleber werden in zunehmendem Mass auf vielen Gebieten eingesetzt. Auf den verschiedenen Gebieten werden an die Haftkleber und die zu ihrer Herstellung eingesetzten Rohstoffe verschiedene Anforderungen gestellt. So verwendet man z.B. bei Klebebändern für medizinische Pflaster, deren Hautreizung möglichst gering sein soll, Polyacrylate, die grössere Anteile von Amid-, Hydroxy-, Carboxyl- oder (Alkyl-)aminoalkylgruppenhaltige Monomeren, letztere zum Teil auch quaterniert, einpolymerisiert enthalten. Solche Monomere erhöhen die Hydrophilie der Klebefilme und damit ihre Hautverträglichkeit. Für die Herstellung von selbstklebenden Etiketten, die auf Substraten verschiedener Polarität, wie Glas, Pappe, Metallen, Lacken und Kunststoffen gleich gute Haftung und gleich gutes Abziehvermögen zeigen müssen, eignen sich Haftkleber für medizinische Pflaster nicht. Bei Haftklebern für Etiketten mit gutem Ablöseverhalten stellt sich nicht die Forderung nach guter Hautverträglichkeit, auch nicht die nach hoher Anfassklebrigkeit (Tack) und hoher Schälfestigkeit, wie z.B. bei Verpackungsklebebändern. Hier wird eine hohe Kohäsion und insbesondere eine mittlere, aber von dem jeweiligen Substrat möglichst unabhängige Schälfestigkeit gefordert. Die Etiketten müssen nämlich universell aufklebbar sein und sie müssen sich auch nach langem Gebrauch ohne Rückstand wieder abziehen lassen. Dies bedeutet eine hohe Beständigkeit der Klebefilme bei der Lagerung und eine hohe Beständigkeit gegenüber Weichmachern, wie sie in geformten Gebilden aus Kunststoffen oft enthalten sind.

Diese speziellen Anforderungen werden durch die Haftkleber des Standes der Technik nur unzureichend erfüllt. Gemäss dem Verfahren der FR-PS 1 533 520 werden Polyacrylate, die 0,005 bis 0,21 Äquivalente aktiven Wasserstoff, bezogen auf 100 g Festprodukt, aufweisen, mit 0,01 bis 1 Äquivalenten (bezogen auf aktiven Wasserstoff) Polyisocyanat bei erhöhter Temperatur vernetzt. Der aktive Wasserstoff wird in die Polyacrylate durch Einpolymerisieren von Monomeren eingebracht, die aktive Wasserstoffatome aufweisen, wie vorzugsweise Carboxyl-, Hydroxyl- oder Amidgruppen, deren Reaktivität insbesondere gegenüber den vergilbungsstabilen aliphatischen Polyisocyanaten sehr gering ist. Man benötigt daher verhältnismässig hohe Vernetzungstemperaturen, z.B. 150°C, wodurch manche Träger, wie Polyvinylchlorid geschädigt werden, oder es wird ein zu hoher Gehalt an einpolymerisierten H-aciden Monomeren erforderlich, wodurch die Hydrophilie der Polymerisate stark erhöht wird mit der Folge, dass die Schälfestigkeiten von damit beschichteten Etiketten sehr stark von der Polarität der Substrate abhängen. Auch die Verwendung von reaktiveren Polyisocyanaten, z.B. von Toluylendiisocyanat, löst das Problem nicht, da die Vernetzungsbedingungen nicht wesentlich gemildert werden, die Topfzeit der Mischungen aber auf wenige Minuten gesenkt wird und die Vergilbungsneigung der Klebefilme zunimmt. Für die Herstellung von Klebefilmen für wieder ablösbare Etiketten eignet sich daher das in der FR-PS 1 533 520 beschriebene Verfahren nicht.

Es wurde nun gefunden, dass Haftkleber, die aus

(A) einem Copolymerisat eines Erweichungspunktes von –60 bis 0°C aus
(a) 60 bis 99,88 Gew.% (Meth)Acrylsäureestern von 4 bis 12 C-Atome enthaltenden Alkanolen,
(b) 0,1 bis 5 Gew.% mindestens eines Monomeren mit mindestens einer Hydroxylgruppe,
(c) 0,02 bis 5 Gew.% mindestens eines Monomeren mit mindestens einer tert.-Aminogruppe und
(d) 0 bis 30 Gew.% anderen copoylmerisierbaren Monomeren,
(B) einem Polyisocyanat mit mindestens zwei Isocyanatgruppen je Molekül in solcher Menge, dass 0,001 bis 1 Äquivalente Isocyanat-Gruppen auf ein Äquivalent OH-Gruppen der Monomeren (b) entfallen
(C) 10 bis 900 Gew.%, bezogen auf (A), gegenüber (A) und (B) inerten Lösungsmitteln und gegebenenfalls
(D) üblichen Zusätzen

bestehen, diese Nachteile nicht aufweisen.

Sie sind bei Raumtemperatur nahezu unbegrenzt lager- und verarbeitungsfähig, ergeben aber bereits nach kurzem Ablüften bei 70°C Haftklebeschichten für Etiketten mit sehr hoher Kohäsion, gleichmässigem Schälfestigkeits- und einwandfreiem Abzugsverhalten, auch nach längerer Lagerung. Sie übertreffen in diesen Eigenschaften die bekannten Haftkleber.

Die Copolymerisate (A) können in an sich üblicher Weise unter Verwendung radikalischer Initiatoren, wie Azoisobuttersäuredinitril, Dibenzoyl-, Dilauryolperoxid, t-Butylperpivalat, -peroctoat, -perlaurat oder -peracetat in Emulsion, Suspension, in der Schmelze oder vorzugsweise in Lösung aus den Monomeren (a) bis (d) durch Polymerisation hergestellt sein. Die Polymerisate werden gegebenenfalls getrocknet und in inerten Lösungsmitteln (C), wie Benzin, Hexan, Heptan, Toluol, Xylolen, Aceton, Methylethylketon, Tetrahydrofuran, Ethylenglycoldiethylether, Ethylglycolacetat, Methylen-, Ethylen-, Propylenchlorid, Methyl-, Ethyl- oder Butylacetat gegebenenfalls bei erhöhter Temperatur mit dem Polyisocyanat (B) vermischt, wobei die Konzentration von (A)+(B) in (C) 10 bis 90 Gew.%, vorzugsweise 25 bis 70 Gew.% beträgt.

Monomere (a) sind insbesondere die (Meth)Acrylsäureester des (Iso)butanols, Pentyl-, Hexyl-, Heptyl-, n- oder Isooctyl-, 2-Ethylhexyl-, Decyl- oder Laurylalkohols und deren Mischungen. Von besonderem Interesse sind n-Butyl- und 2-Ethylhexylacrylat.

Als Hydroxylgruppen enthaltende Monomere (b) sind beispielsweise zu nennen Hydroxyethyl-, -propyl-, -butylacrylat und -methacrylat sowie die von den Oligo- bzw. Polymeren des Ethylen- oder Propylenoxids abgeleiteten ω-Hydroxy-polyalkoxyacrylate und -methacrylate, Hydroxyalkylvinylether, wie Hydroxyethyl- und Butandiolmonovinylether, Dihydroxyverbindungen, wie 2,3-Dihydroxypropylacrylat und -methacrylat, Chlorhydroxypropylacrylat, Allylalkohol, Methallylalkohol, Butenol und Butendiol.

Monomere (c) sind insbesondere Dialkylaminoalkylester α,β-ungesättigter meist 3 bis 5 C-Atome enthaltender Monocarbonsäuren, wie Dimethylaminoethylacrylat und -methacrylat, Diethylaminoethyl- oder -propyl-acrylat und -methacrylat, N-Hydroxiethyl-piperidino-,-piperazino-,-morpholino-,-oxazolidino-acrylat oder -methacrylat, Dialkylaminoalkylimide oder -halbamide der Maleinsäure oder (Meth)Acrylsäure wie Dimethylaminoethylmaleinsäureimid, -halbamid, Dimethylaminopropylacrylamid, tert. Stickstoff enthaltende vinylsubstituierte Heterocyclen, wie 1-Vinylimidazol, 1-Vinyl-2-methylimidazol und Vinylpyridine.

Als Monomere (d) kommen vor allem 4 bis 7 C-Atome aufweisende Acrylate und Methacrylate, die sich von Methanol, Ethanol, Propanol und Isopropanol ableiten, Vinylester wie Vinylacetat, -propionat, -ethylhexanoat und -versatat, Vinylether, wie Methyl-, Ethyl-, Propyl-, (Iso)Butyl-, Ethylhexyl- und Octadecylvinylether, aromatische Monovinylverbindungen, wie Styrol oder Vinyltoluole, N-Vinyllactame, wie N-Vinylpyrrolidon und -caprolactam, Vinylhalogenide, wie Vinylchlorid und Vinylidenchlorid, monoolefinisch ungesättigte Nitrile, wie Acryl- und Methacrylnitril, 1,3-Diene, wie Butadien und Isopren und Alkylester α,β-monoolefinisch ungesättigter Dicarbonsäuren, wie Maleinsäurediethyl- und -dibutylester in Frage.

Die Monomeren (a) bis (d) und ihre Mengen werden so ausgewählt, dass der Erweichungspunkt der Copolymerisate (A) -60°C nicht unter- und 0°C nicht überschreitet. Diese Grenzen sind von Bedeutung, weil die Mischungen dann entweder zu hohen Tack aufweisen oder zu wenig klebrig sind, um sich für wieder ablösbare Etiketten zu eignen.

Werden die Mengenanteile der Monomeren (b) und (c) unterschritten, ist der mögliche Vernetzungsgrad nicht mehr ausreichend, um ausreichende Kohäsion zu gewährleisten. Werden die Mengenanteile dagegen wesentlich überschritten, ist aufgrund der höheren Hydrophilie der Filme mit einer sehr unterschiedlichen Schälfestigkeit auf verschiedenen polaren Substraten, wie Glas, Metall oder lackiertem Holz zu rechnen.

Als Ausgangsstoff (B) können die für die Herstellung von Polyurethanen üblichen Polyisocyanate, d.h. mehrwertige Isocyanate bzw. aliphatische und/oder aromatische Verbindungen mit mindestens zwei Isocyanatgruppen, verwendet werden, sofern sie in den Lösungsmitteln (C) löslich oder dispergierbar sind. Beispiele für geeignete organische Polyisocyanate, insbesondere für Diisocyanate und Triisocyanate, sind 2,4-Toluol-, 2,6-Toluol-, m-Phenylen-, 4-Chlor-1,3-phenylen-, 3,3-Dimethyl-4,4'-diphenylen-, 4,4'-Diphenylen-, 1,5-Naphthalin-, 1,4-Tetramethylen-, 1,6-Hexamethylen-, 1,10-Decamethylen- und 1,4-Cyclohexylendiisocyanat, 4,4-Methylen-bis-(cyclohexylisocyanat), 1,5-Tetrahydronaphthalin-, p-Xylylen-diisocyanat sowie 1,2,4-Benzoltriisocyanat. Die Polyisocyanate können auch andere Substituenten enthalten und auch Dimere und Trimere von monomeren Diisocyanaten und Di-(isocyanatoaryl)-harnstoffen, wie Di-(3-isocyanato-4-methylphenyl)-harnstoff, können verwendet werden.

Geeignete Polyisocyanate sind auch solche, bei denen ein Polyisocyanat der genannten Art durch teilweise Umsetzung mit einer Polyhydroxyverbindung oder einer anderen Verbindung mit zwei oder mehr aktiven Wasserstoffatomen modifiziert ist unter Bildung eines Produkts mit endständigen Isocyanatgruppen.

Als Polyisocyanate ausserdem von Interesse sind 3-Isocyanatomethyl-3,5,5-trimethylcyclohexylisocyanat, Trimethylhexamethylendiisocyanat und Polymethylenpolyphenylisocyanat.

Die Polyisocyanate (B) werden im Unterschuss oder in äquivalenter Menge eingesetzt, wobei 0,001 bis 1 Äquivalente NCO- auf 1 Äquivalent OH-Gruppen der Monomeren (b) entfallen.

Werden weniger als 0,001 Äquivalente Polyisocyanat, bezogen auf die OH-Gruppen der Monomeren (b) in den Copolymerisaten (A) eingesetzt, reicht der erzielbare Vernetzungsgrad nicht mehr aus, um ausreichende Kohäsion zu gewährleisten. Bei Verwendung der Polyisocyanate im Überschuss kann ein Effekt der Weichmachung auftreten, d.h. die Kohäsion der Filme sinkt und ihr Vernetzungsgrad nimmt ab. Der Bereich dazwischen lässt Spielraum für die Einstellung der jeweils gewünschten Schälfestigkeit.

In manchen Fällen werden Zusätze (D) eingesetzt, wie sie bei Haftklebern üblich sind. Solche sind z.B. Klebrigmacher, wie gegebenenfalls hydrierte Kolophoniumester, Kohlenwasserstoff-, Cumaron-, Inden-, Terpen- und Cyclopentadienharze, Weichmacher, wie Dibutyl-, Dibenzyl- und Dioctylphthalat oder -adipat, chlorierte Kohlenwasserstoffe, lineare Polyester oder Paraffinöle, Stabilisatoren, wie p-tert.-Butylkresol und Katalysatoren, wie Dibutylzinndilaurat.

Die Haftkleber, besitzen eine nahezu unbegrenzte «Topfzeit», d.h. ihre Viskosität ist über lange Zeit stabil und eine Gelierung tritt nicht, oder allenfalls nach einigen Wochen, ein. Diese Tatsache ist in vielen Fällen von Bedeutung, wenn die Haftkleber nach ihrer Herstellung nicht sofort verarbeitet werden.

Die erfindungsgemässen Haftkleber können zur Herstellung von Klebebändern und Folien, insbesondere aber zur Herstellung von Etiketten verwendet werden. Als Materialien, die in Form flüssiger Gebilde Träger zur Herstellung der Etiketten dienen, sind zu nennen: Papier sowie Folien aus Metall, Polyethylen, -propylen, -ethylenterephthalat oder PVC. Beispiele für Substrate, auf denen die Etiketten möglichst gleichwertig anwendbar sein sollen, sind Glas, Metalle, Kunststoffe, Holz, (gestrichenes) Papier, Pappe, Textilien, Vliese sowie lackierte oder beschichtete Oberflächen, z.B. aus Alkydharz, Polyurethan-, Acrylharz-, Epoxyharz, Nitrocelluloselacken, Pulver-, Coil-coat-Lacken oder Plastisolen.

Die Beschichtung der flächigen Gebilde mit den erfindungsgemässen Haftklebern kann im direkten Auftrag, z.B. durch Spritzen, Rakeln, Rollen, Giessen, Walzen oder Tauchen erfolgen. Beim indirekten Auftrag, d.h. nach dem Transferverfahren, können die Haftkleber in an sich üblicher Weise zunächst auf einen nichthaftenden Träger, z.B. siliconisiertes Papier, aufgebracht, vernetzt und dann auf das gewünschte Substrat, z.B. Weich-PVC-Folie, übertragen werden.

Für die erfindungsgemässen Haftkleber sind im allgemeinen Vernetzungsbedingungen üblich, die einer rein physikalischen Trocknung, z.B. von Naturkautschuk, entsprechen. Der Temperaturbereich liegt im allgemeinen bei 20 bis 150°C, vorzugsweise bei 30 bis 100°C; die erforderliche Zeit kann von wenigen Sekunden bis einige Minuten betragen. Nach dem Trocknen ist in der Regel auch die Vernetzung abgeschlossen, so dass sich die Eigenschaften während der anschliessenden Lagerung nur geringfügig ändern.

Die erfindungsgemässen Haftkleber eignen sich vor allem für die Beschichtung von Papier- und Kunststoffetiketten. Die Klebefilme besitzen eine hohe Kohäsion, eine gute Schälfestigkeit und ein einwandfreies Abziehverhalten auf den üblichen Substraten, auch wenn sie in verklebtem Zustand lange gelagert werden. Sie sind sehr beständig gegen die Migration von Weichmachern. Sie lassen sich sofort nach der Vernetzung und auch nach der Lagerung im verklebten Zustand, unter Adhäsionsbruch vom Substrat leicht abziehen, wodurch sie sich bei der Verwendung für die Herstellung wieder ablösbarer Etiketten besonders auszeichnen.

In den folgenden Beispielen werden zur Klebeprüfung die Haftkleber mit einer Trockenschichtdicke von 25 g/m² auf siliconisiertes Papier aufgerakelt und im Trockenschrank 5 Minuten bei 70°C getrocknet. Die so erhaltenen Klebefilme werden auf das Trägermaterial Weich-PVC-Folie übertragen. Die so erhaltenen selbstklebenden Folien werden in 2 cm breite Streifen zerschnitten.

Zur Bestimmung der Kohäsion werden die Klebestreifen in 2 cm Länge auf ein V2A-Prüfblech geklebt, 10 Stunden gelagert und anschliessend im Hängen mit einem 1-kg-Gewicht belastet. Masstab der Scherfestigkeit ist die Zeit bis zum Abfallen des Gewichts; man verwendet dabei den Durchschnitt aus 5 Messungen. 0 bis 5 Minuten gilt als schlechte, 24 Stunden als sehr gute und 60 Minuten bis 15 Stunden als geeignete Kohäsion für die Klebeschichten von Etiketten. Bei dieser Prüfung soll möglichst die Klebeschicht zerstört werden (Kohäsionsbruch, als K abgekürzt.

Bei der Bestimmung der Schälfestigkeit wird der Klebestreifen mit verschiedenen in den folgenden Tabellen angegebenen Substraten verklebt, gegebenenfalls gelagert, und in einer Zug-Dehnungs-Prüfapparatur bei 23°C im Winkel von 180° mit einer Geschwindigkeit von 300 mm/min rückwärts abgezogen. Es wird als Mass der Schälfestigkeit die Kraft in N angegeben, die sich als Durchschnittswert aus 5 Prüfungen bei dem 2 cm breiten Streifen ergibt. Die Klebeschicht soll beim Schältest nicht zerstört werden (Adhäsionsbruch) und sich vollständig vom Substrat ablösen. Werte zwischen 3 und 10 N liegen im Bereich dessen, was für Etiketten üblicherweise gefordert wird.

Herstellung der für die Beispiele verwendeten Copolymerisate (A) und von Vergleichscopolymerisaten:

Copolymerisat I

In einem 200-l-Rührbehälter mit Rückflusskühler und Zulaufgefäss werden 0,2 kg Azodiisobuttersäuredinitril, 20 kg 2-Ethylhexylacrylat, 7 kg Isobutylacrylat, 0,15 kg β-Hydroxypropylacrylat, 0,1 kg β-Diethylaminoethylacrylat, 2,8 kg Methylacrylat und 15,3 kg Benzin (Siedebereich 65 bis 95°C) in 5 Stunden unter Rückfluss und Spülen mit Stickstoff eingetragen und polymerisiert. Man rührt 4 Stunden unter Rückfluss nach und verdünnt mit 76,2 kg Toluol, während der Ansatz abkühlt. Die erhaltene Lösung hat einen Feststoffgehalt von 24,8% und das Copolymerisat den K-Wert 112.

Copolymerisat II (Vergleich)

Man verfährt wie bei Copolymerisat I angegeben, setzt aber kein Diethylaminoethylacrylat, dafür aber zusätzlich 0,1 kg Isobutylacrylat ein. Man erhält eine Polymerlösung eines Feststoffgehalts von 24,9%. Das Copolymerisat hat den K-Wert 108.

Copolymerisat III

Wie bei Copolymerisat I angegeben wird ein Gemisch aus 29 kg 2-Ethylhexylacrylat, 0,15 kg 1,4-Butandiolmonoacrylat, 0,3 kg β-Dimethylaminoethylmethacrylat und 0,2 kg t-Butylperpivalat in 20 kg Ethylacetat polymerisiert und anschliessend auf 27% Festgehalt verdünnt. Das Copolymerisat hat den K-Wert 88,5.

Copolymerisat IV (Vergleich)

Man verfährt wie bei Copolymerisat III, tauscht aber Dimethylaminoethylmethacrylat gegen Styrol aus. Es ergibt sich ein Feststoffgehalt von 26,9% und ein K-Wert von 94,2.

Copolymerisat V

Wie für Copolymerisat I angegeben, wird ein Gemisch aus 30,3 kg n-Butylacrylat, 1,5 kg β-Hydroxyethylacrylat und 0,03 kg 2-Vinylimidazol unter Zusatz von 0,31 kg Dilauroylperoxid in einem Gemisch aus 10 kg Aceton und 10 kg Methylacetat polymerisiert und die erhaltene Copolymerisatlösung anschliessend mit Methylenchlorid auf einen Feststoffgehalt von 30% verdünnt. Der K-Wert des Copolymerisats beträgt 118,2.

Copolymerisat VI

Wie für Copolymerisat I angegeben, werden 22,2 kg 2-Ethylhexylacrylat, 7,0 kg Vinylacetat, 0,6 kg Acrylnitril, 0,06 kg β-Hydroxypropylmethacrylat und 0,6 kg β-Diethylaminoethylmethacrylat unter Zusatz von 0,35 kg Dibenzoylperoxid in 18 kg Benzol polymerisiert. Die erhaltene Copolymerisatlösung wird anschliessend mit Tetrahydrofuran auf einen Feststoffgehalt von 21% verdünnt. Der K-Wert des Copolymerisats beträgt 100,7.

Zur Herstellung der Haftkleber werden die Copolymerisate I bis VI mit handelsüblichen Polyisocyanaten vermischt und dann geprüft; gleichzeitig bestimmt man die «Topfzeit» der Haftkleber, d.h. die Zeit bis zu ihrer Gelierung.

Die in den folgenden Tabellen angegebenen Prozente sind, wenn nicht anders angegeben, Gewichtsprozente. Sie sind jeweils auf das lösungsmittelfreie Copolymerisat (A) bezogen. Die Bestimmung der K-Werte erfolgt nach H. Fikentscher, Cellulosechemie 13 (1932), S. 55 ff. Die Abkürzungen A bzw. K bedeuten Adhäsions- bzw. Kohäsionsbruch.

Tabelle 1
Haftkleber auf Basis von Copolymerisat I

| Zusatz an (B) | | Topfzeit in Stunden | Lagerung | Scherfestigkeit | Substrat | Schälfestigkeit in [N] |
|---|---|---|---|---|---|---|
| – | – | – | – | 18 Min. K | V2A | 16,9 K/A |
| *N | 0,001% | >24 | – | 25 Min. K | V2A | 13,7 A/K |
| | 0,04% | >24 | – | >24 Std. | V2A | 4,9 A |
| | 0,1% | >24 | – | >24 Std. | V2A | 4,6 A |
| | 0,5% | >24 | – | >24 Std. | V2A | 4,6 A |
| | 0,8% | >20 | – | >24 Std. | V2A | 4,3 A |
| **IL | 0,008% | >24 | – | 42 Min. K | V2A | 17,7 A/K |
| | 0,1% | 24 | – | >24 Std. | V2A | 4,0 A |
| | 0,3% | >24 | – | >24 Std. | V2A | 4,7 A |
| | 0,1% | >24 | – | – | Alkydharzlack | 8,0 A |
| | 0,1% | >24 | 30 Tage 50° | – | Alkydharzlack | 7,5 A |
| | 0,1% | >24 | – | – | PUR-Lack | 8,0 A |
| | 0,1% | >24 | 30 Tage 50° | – | PUR-Lack | 7,4 A |
| | 0,1% | >24 | – | – | Glas | 3,8 A |
| | 0,1% | >24 | 30 Tage 50° | – | Glas | 3,5 A |
| | 0,1% | >24 | – | – | Nitrolack | 6,5 A |

*N = handelsübliches, biurethaltiges Polyisocyanat auf Basis von Hexamethylendiisocyanat
**IL = Isocyanatgruppen enthaltendes aromatisches Polyisocyanat (NCO-Gruppengehalt 6,3 Gew.%, 51%ige Lösung in Äthylacetat, Viskosität 650±200 m·Pa·s)

Tabelle 2
Vergleichshaftkleber auf Basis von Copolymerisat II

| Zusatz an (B) | | Topfzeit in Stunden | Lagerung | Scherfestigkeit | Substrat | Schälfestigkeit in [N] |
|---|---|---|---|---|---|---|
| N | 0,01% | 3 | – | 5 Min. K | V2A | 14,1 A/K |
| | 0,01% | 3 | – | – | Glas | 15,7 A/K |
| | 0,01% | 3 | 30 Tage 50° | – | Glas | 11,2 A/K |
| IL | 1% | 1 | – | – | Alkydharzlack | 16,2 A/K |
| | 1% | 1 | 30 Tage 50° | – | Alkydharzlack | 14,4 A/K |

Tabelle 3
Haftkleber auf Basis von Copolymerisat III

| Zusatz an (B) | | Topfzeit in Stunden | Lagerung | Scherfestigkeit in Stunden | Substrat | Schälfestigkeit in [N] |
|---|---|---|---|---|---|---|
| N | 0,1% | >24 | - | >24 | V2A | 7,1 A |
| | 0,1% | >24 | 30 Tage 50° | >24 | V2A | 6,8 A |
| IL | 0,2% | >24 | - | >24 | chromiertes Stahlblech | 7,4 A |
| | 0,2% | >24 | 30 Tage 50° | >24 | chromiertes Stahlblech | 7,3 A |
| N | 0,05% | >24 | - | - | Polyurethanlack | 6,7 A |
| | 0,05% | >24 | 30 Tage 50° | - | Polyurethanlack | 7,7 A |
| D | 0,1% | >24 | - | 20 | V2A | 8,1 A |
| | 0,1% | >24 | 30 Tage 50° | >24 | V2A | 8,3 A |
| P | 0,1% | >24 | - | >24 | V2A | 5,4 A |
| | 0,1% | >24 | 30 Tage 50° | >24 | V2A | 5,6 A |
| E | 0,05% | >24 | - | >24 | V2A | 6,2 A |
| | 0,05% | >24 | 30 Tage 50° | >24 | V2A | 6,5 A |
| IPDI | 0,06% | >24 | - | 16 | V2A | 5,7 A |
| | 0,06% | >24 | 30 Tage 50° | 18 | V2A | 5,5 A |

D = 4.4'-Diphenylmethandiisocyanat
P = Polymethylenpolyphenylisocyanat
E = Toluylendiisocyanat (NCO-Gehalt etwa 48%)
IPDI = Isophorondiisocyanat (NCO-Gehalt etwa 37,8%)

Tabelle 4
Vergleichshaftkleber auf Basis von Copolymerisat IV

| Zusatz an (B) | | Topfzeit in Std. | Lagerung | Scherfestigkeit | Substrat | Schälfestigkeit in [N] |
|---|---|---|---|---|---|---|
| N | 0,2% | 5 | - | 10 Min. K | Polyethylen-terephthalat | 18,8 K |
| | 0,2% | 5 | 30 Tage 50° | 17 Min. K | Polyethylen-terephthalat | 16,7 A/K |
| IL | 0,5% | 3 | - | - | Nitrolack | 14,2 K |
| | 0,5% | 3 | 30 Tage 50° | - | Nitrolack | 15,7 K |

Tabelle 5
Haftkleber auf Basis von Copolymerisat V

| Zusatz an (B) | | Topfzeit in Std. | Lagerung | Scherfestigkeit in Std. | Substrat | Schälfestigkeit in [N] |
|---|---|---|---|---|---|---|
| N | 0,03% | >24 | - | >24 | V2A | 7,4 A |
| | 0,03% | >24 | 30 Tage 50° | >24 | V2A | 7,1 A |
| | 0,03% | >24 | - | - | Porzellan | 6,2 A |
| | 0,03% | >24 | 30 Tage 50° | - | Porzellan | 5,9 A |
| | 0,03% | >24 | - | >24 | PVC | 8,9 A |
| | 0,03% | >24 | 30 Tage 50° | >24 | PVC | 9,6 A |

Tabelle 6
Haftkleber auf Basis von Copolymerisat VI

| Zusatz an (B) | | Topfzeit in Std. | Lagerung | Scherfestigkeit in Std. | Substrat | Schälfestigkeit in [N] |
|---|---|---|---|---|---|---|
| N | 0,5% | >24 | – | >24 | V2A | 4,1 A |
| | 0,5% | >24 | – | – | Glas | 3,1 A |
| | 0,5% | >24 | 30 Tage 50° | – | Glas | 4,2 A |
| IL | 0,2% | >24 | – | >24 | Messing | 5,9 A |
| | 0,2% | >24 | 30 Tage 50° | >24 | Messing | 5,1 A |

Ein Vergleich der Tabellen 1 und 6 mit den Tabellen 2 und 4 zeigt, dass nur mit den erfindungsgemässen Haftklebern der Copolymerisate I und III bei schonender Trocknung Klebefilme erhalten werden, die sich aufgrund ihrer Klebewerte und ihrer Lagerstabilität für die Herstellung ablösbarer Etiketten eignen. Dagegen ergeben ähnliche Copolymerisate die keine Comonomere (c) einpolymerisiert enthalten (Copolymerisate II und IV, Vergleichshaftkleber der Tabellen 2 und 4), Haftkleber, die für Etiketten ungeeignet sind.

## Patentansprüche

1. Haftkleber, bestehend aus

(A) einem Copolymerisat eines Erweichungspunkts von –60 bis 0°C aus
(a) 60 bis 99,88 Gew.% (Meth)Acrylsäureestern 4 bis 12 C-Atome enthaltender Alkanole,
(b) 0,1 bis 5 Gew.% mindestens eines Monomeren mit mindestens einer Hydroxylgruppe,
(c) 0,02 bis 5 Gew.% mindestens eines Monomeren mit mindestens einer tert.-Aminogruppe und
(d) 0 bis 30 Gew.% anderen copolymerisierbaren Monomeren,
(B) einem Polyisocyanat mit mindestens zwei Isocyanatgruppen je Molekül in solcher Menge, dass 0,001 bis 1 Äquivalente Isocyanatgruppen auf ein Äquivalent OH-Gruppen der Monomeren (b) entfallen,
(C) 10 bis 900 Gew.%, bezogen auf die Menge an (A), gegenüber (A) und (B) inerten organischen Lösungsmitteln und gegebenenfalls
(D) üblichen Zusätzen.

2. Verwendung der Haftkleber nach Anspruch 1 zur Herstellung von Haftklebeetiketten.

## Claims

1. A pressure-sensitive adhesive consisting of

(A) a copolymer having a softening point of –60 to 0°C derived from
(a) 60 to 99.88% by weight of an ester of acrylic or methacrylic acid with an alkanol of 4 to 12 carbon atoms,
(b) 0.1 to 5% by weight of at least one monomer having at least one hydroxyl group,
(c) 0.02 to 5% by weight of at least one monomer having at least one tert.-amino group, and
(d) 0 to 30% by weight of other copolymerizable monomers,
(B) such an amount of a polyisocyanate having at least two isocyanate groups per molecule that 0.001 to 1 equivalent of isocyanate groups is present per equivalent of OH groups of monomer (b),
(C) 10 to 900% by weight, based on the amount of (A), of an organic solvent which is inert to (A) and (B), and optionally
(D) conventional additives.

2. The use of a pressure-sensitive adhesive as claimed in claim 1 for the production of pressure-sensitive adhesive labels.

## Revendications

1. Colles de contact, composées de:

(A) un copolymérisat formé de
(a) 60 à 99,88% en poids d'esters de l'acide (méth) acrylique d'alcanols en C_4 à C_12,
(b) 0,1 à 5% en poids d'au moins un monomère avec au moins un groupe hydroxyle,
(c) 0,02 à 5% en poids d'au moins un monomère avec au moins un groupe amine tertiaire,
(d) 0 à 30% en poids d'autres monomères copolymérisables,
ce copolymérisat possédant un point de ramollissement compris entre –60 et 0°C;
(B) un polyisocyanate comprenant au moins deux groupes isocyanate par molécule en une proportion telle qu'à un équivalent de groupes hydroxyle du(des) monomère(s) (b) corresponde 0,001 à 1 équivalent de groupes isocyanate;
(C) 10 à 900% en poids, par rapport à la quantité de (A), de solvants organiques inertes vis-à-vis de (A) et de (B) et éventuellement
(D) d'autres additifs usuels.

2. Utilisation des colles de contact selon la revendication 1 pour la fabrication d'étiquettes autocollantes.